# FASCICULE DE BREVET EUROPEEN

(11) **EP 3 062 015 B1**
(45) Date de publication et mention de la délivrance du brevet: **29.07.2020**
(21) Numéro de dépôt: 16156974.4
(22) Date de dépôt: 23.02.2016
(51) Int. Cl.: F21V 8/00

(54) **DISPOSITIF LUMINEUX DE VÉHICULE AUTOMOBILE**
LEUCHTVORRICHTUNG FÜR KRAFTFAHRZEUG
LIGHT DEVICE OF A MOTOR VEHICLE

(30) Priorité: 26.02.2015 FR 1551664
(43) Date de publication de la demande: 31.08.2016
(73) Titulaire: VALEO ILUMINACION, 23600 Martos (ES)
(72) Inventeur: MARTINEZ, Juan Manuel, 18014 Granada (ES); MOISY, Eric, 23009 Jaen (ES); JOYANES, Manuel, 23600 Martos (ES); MONTANO, Maria Del Carmen, 23600 Martos (ES); MARQUEZ, Mari-Carmen, 23650 Torredonjimo (ES); MARTOS, Jose-Maria, 23600 Martos (ES)

(56) Documents cités:
- WO-A1-2013/117755
- US-A1- 2009 147 353
- US-A1- 2011 187 967

## Description

La présente invention a pour objet un dispositif lumineux de véhicule, comportant une nappe de guidage de la lumière. Une application préférée de l'invention est le domaine de l'équipement automobile pour la production de flux lumineux servant à signaler la présence du véhicule et/ou à illuminer une partie de l'environnement du véhicule.

Ainsi, le dispositif lumineux de véhicule selon l'invention peut être :
- un dispositif d'éclairage de véhicule automobile au sens strict, encore appelé dispositif d'éclairage de la route ; par exemple un projecteur, encore appelé phare,
- un dispositif de signalisation, tel qu'un indicateur de direction, un feu stop, une lampe ville, un feu de position de nuit ou un feu de position diurne (encore appelé DRL),
- un dispositif d'éclairage de l'habitacle du véhicule, tel qu'un plafonnier ou une applique.

Il est courant de rassembler dans un seul boîtier plusieurs fonctions d'éclairage et/ou de signalisation, de manière à simplifier le câblage électrique de ces différentes fonctions dans un véhicule automobile.

De plus, la forme des feux d'éclairage et/ou de signalisation joue un rôle prépondérant dans la recherche d'un style et d'une esthétique originale qui permettra au véhicule automobile d'être reconnu de loin.

Pour atteindre ces objectifs, il est connu d'équiper le véhicule avec des guides de lumières, également appelés nappes de guidage de rayons lumineux. Le document 2013/117755 A1 divulgue un "backlight" avec des zones de découplage tandis que les documents US 2011/0187967 A1 et US 2009/0147353 A1 montrent des nappes de guidage de lumière avec des zones de découplage.

Lors de la vision d'un guide de lumière à guide massique ou volumique, la lumière étant à l'intérieur du guide ressort selon la loi de Snell-Descartes, suivant la valeur de ses angles de réflexion et les indices des différents milieux.

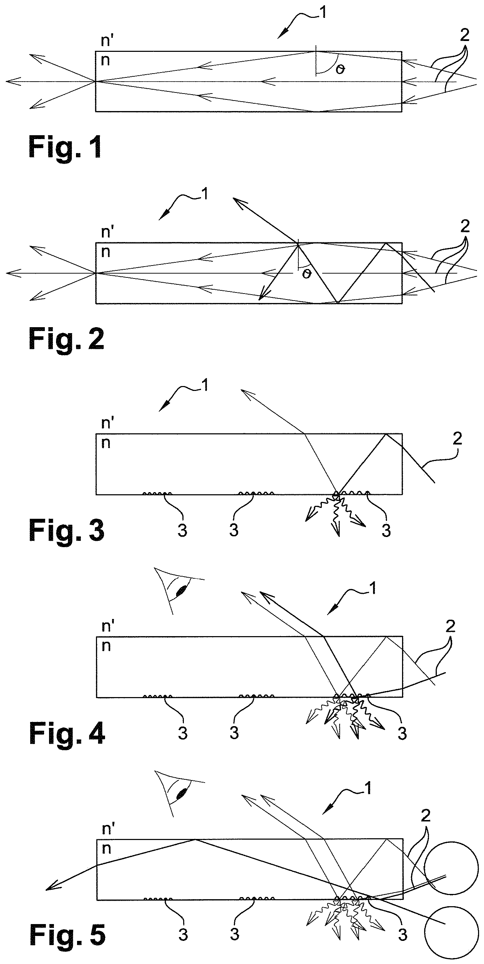

Tel qu'illustré à la figure 1, un guide de lumière 1 est éclairé à l'aide de rayons lumineux 2.

La lumière peut être réfléchie ou réfractée à la frontière entre deux milieux différents suivant la valeur de leur indice n et n'. Selon la loi de Snell-Descartes, le faisceau lumineux change de direction en passant d'un milieu à l'autre.

Lorsque pour un rayon lumineux 2 l'angle θ entre le rayon lumineux et la normale à la surface entre le milieu d'indice n et le milieu d'indice n' dépasse un angle limite θₗᵢₘ, le rayon 2 est totalement réfléchi dans le milieu initial n (figure 1) avec une perte d'énergie.

Tel qu'illustré à la figure 2, Lorsque l'angle θ est inférieur à l'angle limite θₗᵢₘ, le rayon 2 est en partie réfracté dans le milieu extérieur d'indice n', l'autre partie étant réfléchie dans le milieu d'indice n.

Ce principe fonctionne parfaitement quand les surfaces extérieures du guide de lumière 1 surfacique ou volumique sont parfaitement homogènes et polies. Toute dégradation de l'une de ces surfaces, par exemple sur une zone 3 par un traitement de type grainage, rayure, strie etc., entraîne la sortie de la lumière par réfraction au niveau de la surface inférieure du guide (figure 3), le rendement baissant rapidement car il y a perte d'énergie suivant les lois physiques des guides d'ondes.

Pour réaliser des décorations, il suffit de définir un motif optique particulier, par exemple par un traitement décrit ci-dessus et illustré à la figure 3, pour que le motif optique soit visible pour un observateur extérieur (figure 4). Ainsi, la zone 3 constitue une zone de découplage optique permettant que les rayons lumineux 2 soient déviés et soient ainsi réfractés vers le milieu extérieur pour sortir du guide 1 et se propager selon une direction d'illumination.

Cependant, pour un observateur extérieur, le guide de lumière 1 se comporte dans ses faces inférieures comme un miroir, ce qui génère des réflexions et des motifs fantômes à l'intérieur du guide 1, nuisant à la bonne lecture des motifs optiques de décoration. Ceci vient s'ajouter aux faisceaux réfractés qui sortent eux aussi du guide de lumière 1 (figure 5).

La présente invention vise à remédier à ces inconvénients.

Elle propose en particulier un dispositif d'éclairage ou de signalisation pour véhicule automobile qui permet de s'affranchir de ces problèmes de réflexions et réfractions non souhaitées.

L'invention a ainsi pour objet un dispositif lumineux de véhicule automobile, comprenant :
- une nappe de guidage de lumière munie de zones de découplage optique, et
- un générateur de lumière apte à envoyer la lumière en direction de la nappe de guidage de lumière.

Dans le dispositif selon l'invention, la nappe de guidage de lumière est recouverte localement d'un matériau absorbeur de lumière. Ainsi, la présence de ce matériau absorbeur de lumière sur une ou plusieurs zones prédéterminées permet d'absorber les rayons lumineux sur ces zones où l'on souhaite éviter les réflexions et réfractions non souhaitées.

Selon une réalisation de l'invention le matériau absorbe entre 60% et 100% des rayons lumineux qui le rencontrent, préférentiellement au moins entre 90% et 100%.

Le générateur de lumière peut comprendre au moins un élément émetteur à semi-conducteur, notamment une diode électroluminescente.

Le dispositif peut comprendre un collimateur et/ou un guide de lumière recevant les rayons lumineux de la source lumineuse et les renvoyant en direction de la nappe de guidage de lumière.

Le collimateur et/ou le guide de lumière peuvent être venus de matière avec la nappe de guidage.

Le générateur de lumière peut être intégré à la nappe de guidage de lumière.

Le matériau absorbeur de lumière peut être un matériau opaque.

Les zones de découplage optique peuvent aptes à envoyer la lumière dans une direction identique à la direction de la lumière issue du générateur de lumière.

Dans un premier mode de réalisation non couvert par les revendications, les zones de découplage optique peuvent être disposées sur une première face de la nappe de guidage de lumière et le matériau absorbeur de lumière peut être disposé sur l'ensemble d'une deuxième face de la nappe de guidage de lumière opposée à cette première face. Par exemple, la première face est la face supérieure de la nappe de guidage et la face opposée est la face inférieure de la face de guidage.

Dans un deuxième mode de réalisation non couvert par les revendications, les zones de découplage optique peuvent être disposées sur la deuxième face, notamment la face inférieure, de la nappe de guidage de lumière et le matériau absorbeur de lumière peut être disposé sur la deuxième face de la nappe de guidage de lumière, entre les zones de découplage optique.

Dans un mode de réalisation, les zones de découplage optique peuvent être disposées sur des parois de la nappe de guidage de lumière, ces parois étant orientées de manière à former un angle, notamment un angle de 90°, avec la première paroi et le matériau absorbeur de lumière peut être disposé sur l'ensemble de la deuxième face de la nappe de guidage de lumière.

L'invention a aussi pour objet un moule pour guide de lumière pour un dispositif lumineux de véhicule automobile, comprenant au moins une première partie comprenant au moins une cavité, et au moins une deuxième partie comprenant au moins une première et une deuxième sous-parties, au moins l'une des première et deuxième sous-parties comprend au moins une cavité. Au moins l'une des première et deuxième parties est mobile de sorte que chacune des sous-parties soit apte à venir en contact successivement avec la première partie.

En outre l'invention possède les caractéristiques suivantes, considérées isolément ou en combinaison :
- la cavité de la première partie et la cavité de l'une des première et deuxième sous-parties viennent en contact pour former une seule empreinte. On entend par « une seule empreinte » le fait que chaque cavité de chaque partie peuvent être remplie en même temps et par le même orifice de d'injection,
- la première partie et l'une des première et deuxième sous-parties viennent en contact selon un plan de joint, chaque cavité débouchant sur ledit plan de joint,
- l'une des première et deuxième parties est montée mobile en rotation,
- l'une des première et deuxième parties est montée mobile en translation,
- l'une des première et deuxième parties est montée fixe,
- l'autre des première et deuxième sous parties est dépourvue de cavités,
- les première et deuxième sous parties présentent chacune au moins une cavité,
- l'une des première et deuxième parties du moule comprend des stries,
- les stries sont en saillie de la surface de ladite partie du moule et en vis-à-vis de l'autre partie du moule,
- l'autre des première et deuxième sous-parties comprend les stries,
- les deux sous-parties sont venues de matière,
- la première comprend au moins un orifice d'injection destiné à permettre le remplissage de la cavité de la première partie par de la matière,
- au moins une des première et deuxième sous-parties comprend au moins un orifice d'injection destiné à permettre le remplissage de la cavité de l'une des première et deuxième sous-parties par de la matière.

L'invention a en outre pour objet un procédé de moulage d'un dispositif lumineux de véhicule automobile, à l'aide d'un moule de la présente invention. Il comprend les étapes suivantes :
- mise en contact de la première partie et de l'une des première et deuxième sous-parties,
- première injection de matière dans la ou chaque cavité de la première partie,
- déplacement de l'une des premières et deuxième partie pour mettre en contact la première partie et l'autre des première et deuxième sous-parties,
- deuxième injection de matière dans la ou chaque cavité de la deuxième partie.

De plus l'invention possède les caractéristiques suivantes, considérées isolément ou en combinaison :
- au moins une première étape de solidification de la matière après l'injection de matière dans la première empreinte,
- au moins une deuxième étape de solidification de la matière après l'injection de matière dans la deuxième empreinte,
- la dernière étape est une étape de démoulage,
- le déplacement de l'une des première et deuxième parties est un déplacement en translation puis en rotation puis en translation.

D'autres caractéristiques et avantages de la présente invention apparaîtront plus clairement à la lecture de la description suivante donnée à titre d'exemple illustratif et non limitatif et faite en référence aux dessins annexés sur lesquels :
- les figures 1 à 5, déjà décrites, illustrent une nappe de guidage d'un dispositif d'éclairage ou de signalisation de l'état de la technique,
- les figures 6a, 6b, 6a' et 8 illustrent un dispositif d'éclairage ou de signalisation, selon différents modes de réalisation non couverts par les revendications,
- les figures 6c, 7 et 9 illustrent un dispositif d'éclairage ou de signalisation selon l'invention, conformément à différents modes de réalisation couverts par les revendications, et
- les figures 10 à 14 illustrent différents modes de réalisation d'un procédé de fabrication d'un dispositif d'éclairage ou de signalisation selon l'invention.

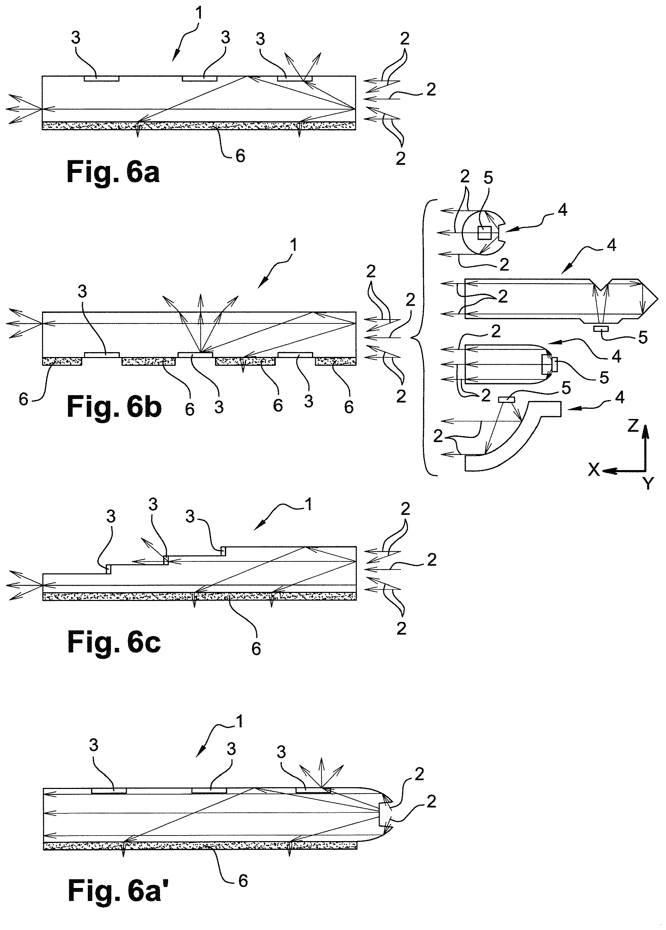

Tel qu'illustré aux figure 6a, 6b, 6c et 6a', un dispositif d'éclairage ou de signalisation selon l'invention comprend un générateur de lumière, qui comprend dans cet exemple un collimateur 4, ainsi qu'une nappe de guidage de lumière 1. Les rayons lumineux 2 issus du collimateur 4 sont émis en direction de la nappe de guidage 1 suivant un axe horizontal x. Quatre exemples possibles de collimateurs 4 sont illustrés à la figure 6, chaque collimateur 4 pouvant être muni d'au moins une source lumineuse 5, telle qu'une diode électroluminescente.

La lumière collimatée par le collimateur 4 entre dans la nappe de guidage 1. La nappe de guidage 1 est munie de zones 3 de découplage optique, en particulier des zones 3 de découplages optiques diffractives, permettant que les rayons lumineux 2 soient déviés et soient ainsi réfractés vers le milieu extérieur pour sortir de la nappe de guidage 1 et se propager selon une direction d'illumination. Les zones 3 de découplage optique peuvent être obtenues par exemple par grainage, striage, ou encore par l'utilisation de billes optiques ou de facettes inclinées, notamment de type micro-prisme. Les éléments de découplage des zones 3, tels que les facettes ou stries, forment des surfaces réfléchissantes et sont orientées de manière à réfléchir transversalement les rayons lumineux se propageant le long de la nappe de guidage 1, de manière à ce qu'ils sortent de la nappe 1 et se propagent selon la direction principale d'illumination.

Les rayons lumineux 2, cheminant de droite à gauche dans la direction indiquée par les flèches, sortent ainsi de la nappe de guidage 1 à la fois par l'extrémité gauche de la nappe 1, de manière à obtenir la grille photométrique souhaitée, et par les zones 3 de découplage optique, de manière à conférer une signature lumineuse et un aspect graphique au dispositif d'éclairage ou de signalisation.

Conformément à l'invention, la nappe de guidage 1 est recouverte localement, par exemple sur une ou plusieurs zones externes de la nappe 1, d'un matériau 6 absorbeur de lumière, typiquement un matériau opaque. Le matériau opaque 6 permet d'absorber les rayons lumineux sur les zones où l'on souhaite éviter les réflexions et réfractions non souhaitées.

Quatre modes de réalisation possibles de la nappe de guidage 1 sont illustrés.

Dans un premier mode de réalisation illustré à la figure 6a, les zones 3 de découplage optique sont disposées horizontalement sur la face supérieure de la nappe 1. Le matériau opaque 6 est disposé sur l'ensemble de la face inférieure de la nappe 1. Ainsi, les rayons lumineux 2 qui se dirigent vers le bas de la nappe 1 sont absorbées par le matériau 6, ce qui permet d'éviter des réflexions et réfractions parasites de ces rayons 2.

Dans un deuxième mode de réalisation illustré à la figure 6b, les zones 3 de découplage optique sont disposées horizontalement sur la face inférieure de la nappe 1, par exemple à intervalles réguliers. Le matériau opaque 6 est disposé sur la face inférieure de la nappe 1, entre les zones 3 de découplage optique, ce qui permet d'absorber les rayons lumineux 2 entre les zones 3 de découplage optique.

Dans un troisième mode de réalisation illustré à la figure 6c, les zones 3 de découplage optique sont disposées verticalement, sur des parois verticales de la nappe de guidage 1, qui est par exemple conformée en marches d'escalier. Le matériau opaque 6 est disposé sur l'ensemble de la face inférieure de la nappe 1, et les rayons lumineux 2 qui se dirigent vers le bas de la nappe 1 sont absorbés par le matériau 6.

Dans une variante du premier mode de réalisation, illustré à la figure 6a', la source de lumière 4 peut faire fait partie de la nappe de guidage 1.

On peut ainsi envisager toute combinaison d'une nappe de guidage 1 selon l'un des trois premiers modes de réalisation avec tout collimateur 4.

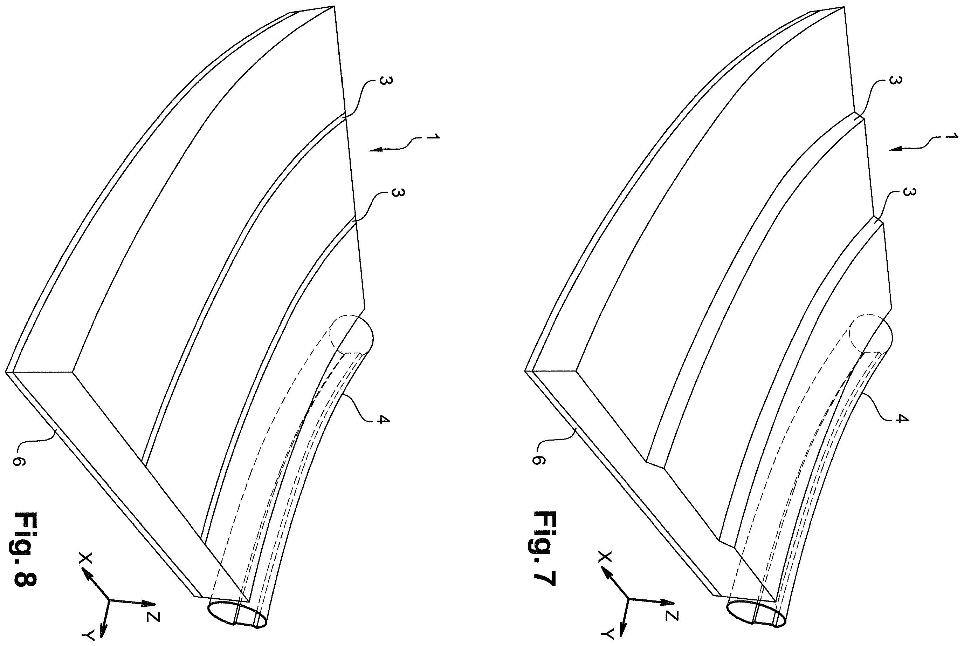

La figure 7 illustre ainsi un mode de réalisation dans lequel le collimateur 4 est de forme cylindrique et les zones 3 de découplage sont disposées de manière inclinée sur la face supérieure de la nappe de guidage 1. Le matériau opaque 6 est disposé sur l'ensemble de la face inférieure de la nappe 1, et les rayons lumineux 2 qui se dirigent vers le bas de la nappe 1 sont ainsi absorbés par le matériau 6.

Dans le mode de réalisation illustré à la figure 8, le collimateur 4 est de forme cylindrique et les zones 3 de découplage optique sont disposées horizontalement sur la face supérieure de la nappe 1, le matériau opaque 6 étant disposé sur l'ensemble de la face inférieure de la nappe 1.

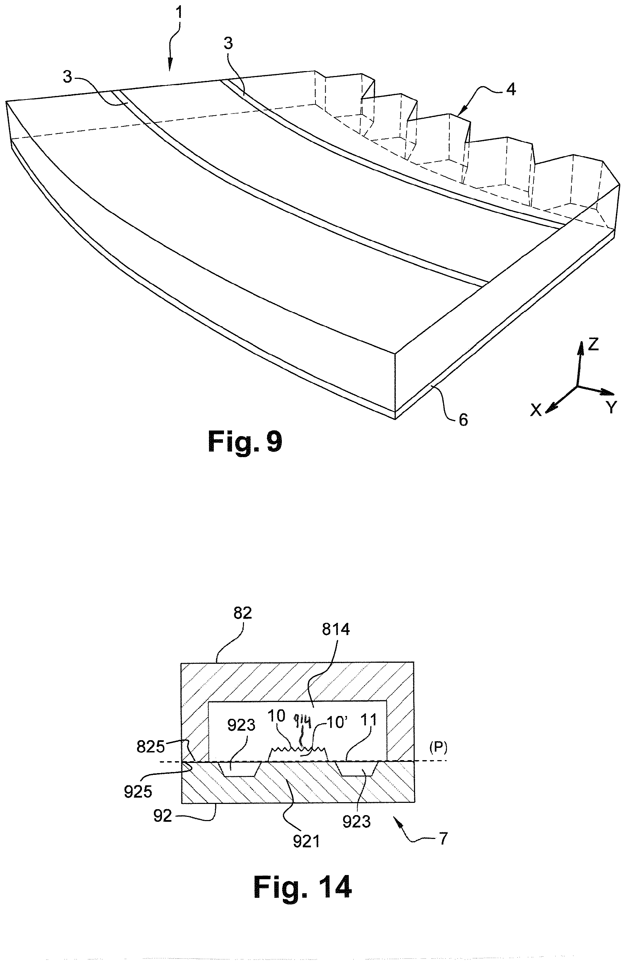

Dans le mode de réalisation illustré à la figure 9, on reprend la nappe 1 du mode de réalisation illustré à la figure 7, mais cette fois le collimateur 4 est intégré à la nappe de guidage 1, le dispositif étant ainsi en un seul élément. En d'autre terme, le collimateur 4 est venu de matière avec la nappe de guidage 1.

La suite de la description est consacrée à différents exemples d'un procédé de fabrication du dispositif d'éclairage ou de signalisation.

Le procédé comprend typiquement deux phases d'injections, à savoir une phase d'injection lors de laquelle on injecte le matériau absorbeur de lumière, et une phase d'injection lors de laquelle on injecte le matériau constitutif de la nappe de guidage de lumière.

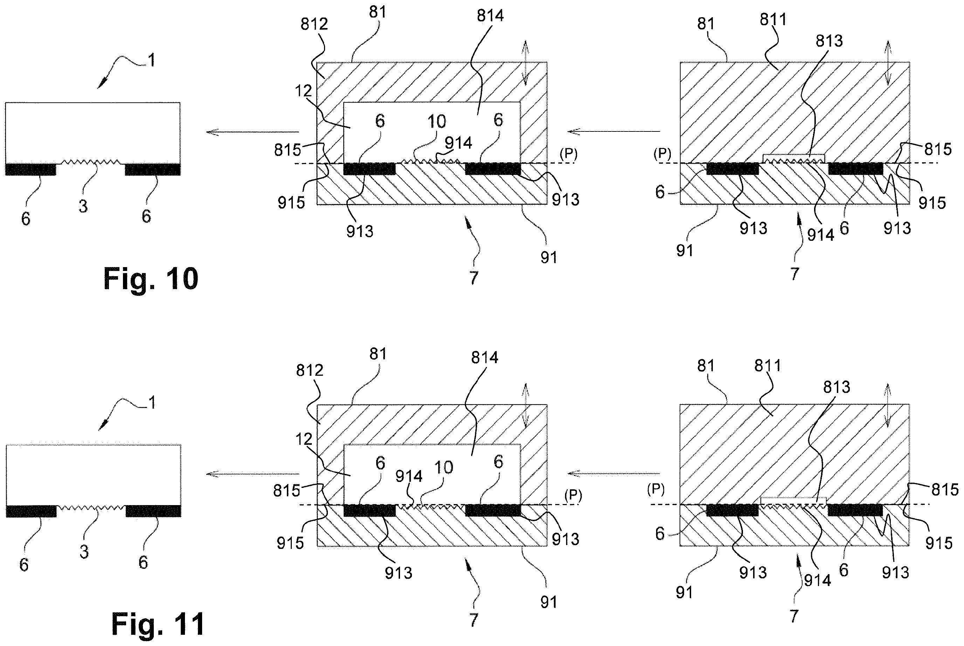

La figure 10 illustre un premier mode de réalisation du procédé. On utilise un moule d'injection 7, qui comprend une première partie 91 comprenant deux cavités 913 et une deuxième partie 81 qui est un noyau de moule. La première partie inférieure 91 est fixe, tandis que le noyau 81 est rotatif selon un axe de rotation vertical. Le noyau 81 comprend une première sous-partie 811 et une deuxième sous-partie 812.

Avant la première phase d'injection, la première sous-partie 811 vient au contact de la première partie 91 selon le plan de joint (P). Puis un matériau opaque 6 est injecté par un orifice d'injection dans les cavités dédiées 913 de la première partie 91, la première sous-partie 811 étant pleine de manière à diriger l'injection dans la première partie 91.

On effectue ensuite une translation-rotation-translation du noyau 81 pour que la deuxième sous-partie 812 du noyau 81 soit mise en contact de la première partie 91 avant la deuxième phase d'injection. La deuxième sous-partie 812 du noyau 81 présente une cavité 814 de forme correspondante à celle de la nappe de guidage 1. Les cavités 913 avec la cavité 814 forment alors une seule empreinte c'est-à-dire toutes les cavités 913 et 814 pourraient être remplies de matière en même temps grâce à un seul et même orifice d'injection pris parmi les orifices d'injections du moule si ces cavités 814 et 913 étaient vides. Chaque zone de découplage optique 3 est obtenue à l'aide de motifs de découplage optique tels que des stries ou des dents 10. Ces stries ou ces dents 10 sont obtenue grâce à des motifs complémentaires 914, qui sont en saillie de la surface supérieure 915 de la première partie 91 du moule, c'est-à-dire situés au-dessus de la surface supérieure 915 de la première partie 91. Puis un matériau transparent est injecté par un orifice d'injection dans la cavité 814 du noyau 81 afin de former le guide de lumière 1. Le matériau transparent est donc surmoulé sur le matériau opaque 6, en d'autres termes au moins une partie du matériau opaque 6 est en contact avec le guide de lumière 1.

A l'issue de la deuxième injection, une fois le moule 7 enlevé, on obtient le produit moulé par démoulage.

Dans un mode de réalisation préféré, la première sous-partie 811 du noyau 81 comprend une cavité 813 permettant d'éviter ainsi l'écrasement des motifs complémentaires 914 lors de la mise en contact de la première partie 91 et de la première sous-partie 811.

Dans un deuxième mode de réalisation, tel qu'illustré à la figure 11, sur laquelle les éléments identiques à ceux de la figure 10 portent les mêmes références, le procédé est identique à celui du premier mode de réalisation à la différence près que les dents 10 sont situées sous la surface supérieure 915 de la première partie 91. La cavité 813 de la première sous-partie 811 de la deuxième partie 81 du moule 7 n'est alors plus nécessaire.

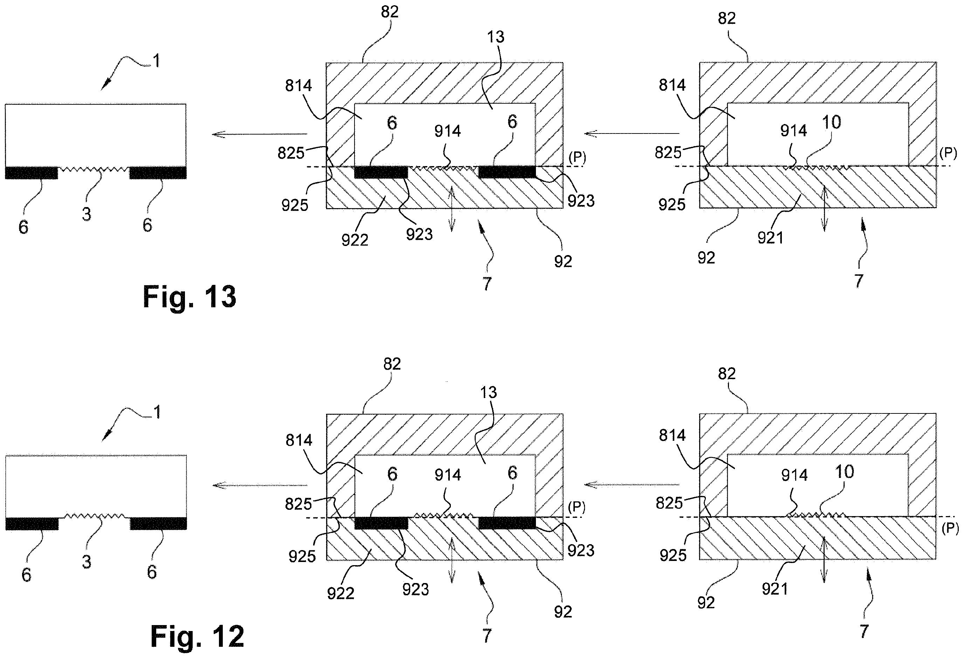

Dans un troisième de réalisation, tel qu'illustré à la figure 12, la première partie 82 du moule 7 ou noyau 82 est fixe, tandis que la deuxième partie 92 du moule 7 est mobile en rotation selon un axe vertical.

La première partie 82 présente une cavité 814 de forme correspondante à celle de la nappe de guidage 1. Chaque zone de découplage optique 3 est obtenue à l'aide de motifs de découplage optique tels que des stries ou des dents 10. Ces stries ou ces dents 10 sont obtenue grâce à des motifs complémentaires 914, qui sont en saillie de la surface supérieure 925 de la première sous-partie 921 du moule 7, c'est-à-dire situés au-dessus de la surface supérieure 925 de la première sous-partie 921.

Avant la première phase d'injection, la première sous-partie 921 vient au contact de la première partie 82 selon le plan de joint (P). Puis un matériau transparent est injecté par un orifice d'injection dans la cavité dédiée 814 de la première partie 82, la première sous-partie 921 étant pleine de manière à diriger l'injection dans la cavité première partie 82.

On effectue ensuite une translation-rotation-translation de la deuxième partie 92 pour que la deuxième sous-partie 922 soit mise en contact de la première partie 82 avant la deuxième phase d'injection. Les cavités 923 avec la cavité 814 forment alors une seule empreinte c'est-à-dire toutes les cavités 923 et 814 pourraient être remplies de matière en même temps grâce à un seul et même orifice d'injection pris parmi les orifices d'injections du moule si ces cavités 814 et 913 étaient vides.

Cela permet une injection d'un matériau opaque 6 dans des cavités dédiées 923 de la deuxième sous-partie 922. Le matériau opaque 6 est donc surmoulé sur le matériau transparent, en d'autres termes au moins une partie du matériau opaque 6 est en contact avec le guide de lumière 1. La cavité 814 de la première partie étant remplie du fait de la première injection, la deuxième injection est ainsi dirigée vers les cavités 6 de la deuxième sous-partie 922.

A l'issue du procédé d'injection, une fois le moule 7 enlevé, on obtient le produit moulé par démoulage.

Dans un quatrième mode de réalisation, tel qu'illustré à la figure 13, le procédé est identique à celui du troisième mode de réalisation à la différence près que les dents 10 sont situées sous la surface supérieure 925 de la première sous-partie 921 ainsi que sous la surface supérieure 925 de la deuxième sous-partie 922.

La figure 14 illustre un cinquième mode de réalisation. Ce mode réalisation diffère de la figure 13 en ce que les stries/dents 10 sur la nappe de guidage sont dans une cavité 10' de la nappe, c'est-à-dire en retrait par rapport à la face inférieure de celle-ci.

Lors de la première phase d'injection illustrée à la figure 14, la première sous-partie de la deuxième partie 92 mobile comprend des cavités 923 ; la cavité 10' de la première partie 82, fixe, est entourée par deux plateaux 11, dont la largeur de chacun est supérieure à celle de chaque cavité 923 de la première sous-partie 921 de la deuxième partie 92. Chaque plateau 11 est destiné à venir en vis-à-vis de chaque cavité 923 lors de la première phase d'injection c'est à dire lors du moulage de la nappe de guidage 1. Ainsi, les bords de chaque cavité 923 de la première sous-partie 921 de la deuxième partie 92 du moule 7 viennent en contact étanche avec le plateau 11 correspondant. La cavité 10' étant entre deux plateaux 11, celle-ci ne sera pas remplie lors de l'injection du matériau absorbant dans les cavités 923 de la partie 92 du moule (deuxième phase d'injection).

L'avantage est que lors de la première phase d'injection, il n'est plus nécessaire d'avoir des stries complémentaires des stries 10 de la nappe de guidage sur la deuxième partie 92 du moule, comme c'est illustré en figures 12 et 13, pour éviter que du matériau absorbant se surmoule sur ces stries.

Dans une variante du cinquième mode de réalisation, non illustrée, le première partie 82 comprend au moins deux cavités 10' consécutives séparées par au moins un plateau 11.

Dans une variante du cinquième de mode de réalisation, non illustrée, la deuxième partie 92 comprend autant de cavités 923 que de plateaux 11 de la première partie 82.

Chaque mode de réalisation peut comprendre une étape de solidification après une ou chaque étape d'injection. Cette étape de solidification consiste à attendre un temps défini avant de passer à l'étape suivante.

## Revendications

1. Dispositif lumineux de véhicule automobile, comprenant :
- une nappe de guidage de lumière (1) munie de zones de découplage optique (3), et
- un générateur de lumière apte à envoyer la lumière en direction de la nappe de guidage de lumière (1), de manière à ce que la lumière se propage le long de la nappe,
la nappe de guidage de lumière (1) étant recouverte localement d'un matériau absorbeur de lumière (6),
le dispositif étant **caractérisé en ce que** les zones de découplage optique (3) sont aptes à envoyer la lumière dans une direction identique à la direction de la lumière issue du générateur de lumière.

2. Dispositif selon la revendication 1, **caractérisé en ce que** le générateur de lumière comprend une diode électroluminescente (5).

3. Dispositif selon l'une des revendications 1 à 2, **caractérisé en ce qu'**il comprend un collimateur (4) et/ou un guide de lumière recevant les rayons lumineux de la source lumineuse (5) et les renvoyant en direction de la nappe de guidage de lumière (1).

4. Dispositif selon la revendication précédente, **caractérisé en ce que** le collimateur (4) et/ou le guide de lumière sont venus de matière avec la nappe de guidage de lumière (1).

5. Dispositif selon l'une des revendications 1 à 4, **caractérisé en ce que** le générateur de lumière est intégré à la nappe de guidage de lumière (1).

6. Dispositif selon l'une des revendications 1 à 5, **caractérisé en ce que** le matériau absorbeur de lumière (6) est un matériau opaque.

7. Dispositif selon l'une des revendications 1 à 6, **caractérisé en ce que** les zones de découplage optique (3) sont disposées sur des parois de la nappe de guidage de lumière (1), ces parois étant orientées de manière à former un angle, notamment un angle de 90°, avec une première face et **en ce que** le matériau absorbeur de lumière (6) est disposé sur l'ensemble d'une deuxième face de la nappe de guidage de lumière (1).

8. Procédé d'obtention d'un dispositif selon l'une des revendications 1 à 7, comportant une étape de moulage par injection à l'aide d'un moule (7) comprenant une première partie (81, 82) et une deuxième partie (91, 92), la deuxième partie (91, 92) comprenant des zones de réception (913, 923) du matériau absorbeur de lumière (6).

9. Procédé selon la revendication 8 comprenant en outre une étape d'injection lors de laquelle on injecte le matériau absorbeur de lumière (6), et une étape d'injection lors de laquelle on injecte le matériau constitutif de la nappe de guidage de lumière (1).

## Patentansprüche

1. Leuchtvorrichtung für ein Kraftfahrzeug, welche umfasst:
- eine Lichtleitungslage (1), die mit Bereichen optischer Entkopplung (3) versehen ist, und
- einen Lichtgenerator, der dafür ausgelegt ist, das Licht in Richtung der Lichtleitungslage (1) zu senden, so dass das Licht sich entlang der Lage ausbreitet,
wobei die Lichtleitungslage (1) lokal mit einem Licht absorbierenden Material (6) bedeckt ist, wobei die Vorrichtung **dadurch gekennzeichnet ist, dass** die Bereiche optischer Entkopplung (3) dafür ausgelegt sind, das Licht in eine Richtung zu senden, die mit der Richtung des von dem Lichtgenerator ausgehenden Lichtes identisch ist.

2. Vorrichtung nach Anspruch 1, **dadurch gekennzeichnet, dass** der Lichtgenerator eine Leuchtdiode (5) umfasst.

3. Vorrichtung nach einem der Ansprüche 1 bis 2, **dadurch gekennzeichnet, dass** sie einen Kollimator (4) und/oder einen Lichtleiter umfasst, der die Lichtstrahlen der Lichtquelle (5) empfängt und sie in Richtung der Lichtleitungslage (1) umlenkt.

4. Vorrichtung nach dem vorhergehenden Anspruch, **dadurch gekennzeichnet, dass** der Kollimator (4) und/oder der Lichtleiter stoffschlüssig mit der Lichtleitungslage (1) verbunden sind.

5. Vorrichtung nach einem der Ansprüche 1 bis 4, **dadurch gekennzeichnet, dass** der Lichtgenerator in die Lichtleitungslage (1) integriert ist.

6. Vorrichtung nach einem der Ansprüche 1 bis 5, **dadurch gekennzeichnet, dass** das Licht absorbierende Material (6) ein lichtundurchlässiges Material ist.

7. Vorrichtung nach einem der Ansprüche 1 bis 6, **dadurch gekennzeichnet, dass** die Bereiche optischer Entkopplung (3) an den Wänden der Lichtleitungslage (1) angeordnet sind, wobei diese Wände so ausgerichtet sind, dass sie einen Winkel, insbesondere einen Winkel von 90°, mit einer ersten Seite bilden, und dadurch, dass das Licht absorbierende Material (6) auf einer gesamten zweiten Seite der Lichtleitungslage (1) angeordnet ist.

8. Verfahren zur Herstellung einer Vorrichtung nach einem der Ansprüche 1 bis 7, welches einen Schritt des Spritzgießens mithilfe einer Spritzform (7) umfasst, die einen ersten Teil (81, 82) und einen zweiten Teil (91, 92) umfasst, wobei der zweite Teil (91, 92) Bereiche für die Aufnahme (913, 923) des Licht absorbierenden Materials (6) umfasst.

9. Verfahren nach Anspruch 8, welches außerdem einen Schritt des Einspritzens, in welchem das Licht absorbierende Material (6) eingespritzt wird, und einen Schritt des Einspritzens, in welchem das Material eingespritzt wird, aus dem die Lichtleitungslage (1) besteht, umfasst.

## Claims

1. Motor vehicle light device, comprising:
- a light guide layer (1) equipped with optical decoupling zones (3), and
- a light generator able to send light toward the light guide layer (1), so that the light spreads along the guide layer,
the light guide layer (1) being locally covered with a light-absorbing material (6),
the device being **characterized in that** the optical decoupling zones (3) are able to pass light in a direction identical to the direction of the light coming from the light generator.

2. Device according to claim 1, **characterized in that** the light generator comprises a light-emitting diode (5).

3. Device according to one of Claims 1 and 2, **characterized in that** it comprises a collimator (4) and/or a light guide receiving the rays of light from the light source (5) and passing them on toward the light guide layer (1).

4. Device according to the preceding claim, **characterized in that** the collimator (4) and/or the light guide are formed as an integral part of the light guide layer (1).

5. Device according to one of claims 1 to 4, **characterized in that** the light generator is integrated into the light guide layer (1).

6. Device according to one of claims 1 to 5, **characterized in that** the light-absorbing material (6) is an opaque material.

7. Device according to one of claims 1 to 6, **characterized in that** the optical decoupling zones (3) are arranged on walls of the light guide layer (1), these walls being oriented in such a way as to form an angle, notably an angle of 90°, with a first face and **in that** the light-absorbing material (6) is arranged on the entirety of a second face of the light guide layer (1).

8. Method to obtain a device according to one of claims 1 to 7, comprising a step of injection molding using a mold (7) comprising a first part (81, 82) and a second part (91, 92), the second part (91, 92) comprising accommodating zones (913, 923) for accommodating the light-absorbing material (6).

9. Method according to claim 8, further comprising an injection step during which the light-absorbing material (6) is injected and an injection step during which the material of which the light guide layer (1) is made is injected.
